# EUROPEAN PATENT APPLICATION

(11) **EP 0 587 083 A1**
(43) Date of publication of application: **16.03.1994**
(21) Application number: 93114241.8
(22) Date of filing: 06.09.1993
(51) Int. Cl.: C08K 3/00, C08K 3/40, C03C 14/00

(54) **Stabilizer for glass/polymer composites**

(30) Priority: 10.09.1992 US 942815; 30.08.1993 US 112057
(71) Applicant: Corning Incorporated, Corning New York 14831 (US)
(72) Inventor: Aitken, Bruce Gardiner, Corning, NY 14831 (US); Bookbinder, Dana Craig, Corning, NY 14831 (US); Dickinson, James Edward, Jr., Corning, NY 14831 (US); Wedding, Brent Merle, Corning, NY 14831 (US)
(74) Representative: Reinhard - Skuhra - Weise & Partner

(57) **Abstract**

This invention is directed to a phosphate-based glass/organic polymer composite of increased resistance to hydration, and a method of producing such a composite, which comprises a mixture of the following components: a matrix material comprised of at least one organic thermoplastic or thermosetting polymer; at least one phosphate glass; and an amount of at least one water soluble stabilizer component which provides a source of metal cations having a valency of 2⁺ or higher. The amount of the stabilizer component is sufficient to improve the composite's resistance to moisture. Preferably, the mixture is comprised of the three basic components in the approximate indicated weight proportions: 1-99.5% of the matrix material; 0.1-95% of the phosphate glass; and, 0.01-40% of the stabilizer component. Furthermore, the metal cations preferred are selected from the group consisting of Ba²⁺, Mg²⁺, Ca²⁺, Al³⁺, Zn²⁺, Sr⁺² and Fe³⁺.

## Description

### RELATED APPLICATIONS

This application is a continuation-in-part of patent application Serial No. 07/942,815 filed September 10, 1992 by B. Aitken et al. under the title "Stabilizer for Glass/Polymer Composites". This application is also related to U.S. patent application Serial No. 08/100,835 filed , 1993 by B. Aitken et al. under the title "Stabilizer for Glass/Polymer Composites" which is continuation-in-part of U.S. patent application Serial No. 07/943,014, filed September 10, 1992.

### FIELD OF THE INVENTION

The present invention relates to a more durable glass/polymer composite and a method for increasing the durability of the composite. In general, it involves the addition of a third component solid stabilizer to the glass/polymer composite, resulting in a glass/polymer composite in which the glass phase possesses the means to form an insoluble surface coating in the presence of moisture, i.e., increased durability to hydration.

### BACKGROUND OF THE INVENTION

Composite bodies containing organic polymers are well known to the art. Generally speaking, polymer composites, which may be regarded as multi-phase materials of two or more components in which the polymer comprises the continuous phase, can be considered as containing fillers or reinforcing agents, the function of the two frequently overlapping. Thus, polymer composites have conventionally consisted of a base polymer containing additives such as plasticizers, colorants, flame retardants, reinforcing fibers and/or whiskers, fillers and stabilizers against heat and/or sunlight.

Such filled plastic products are commercially available and customarily consist of organic polymers enveloping discrete organic or inorganic particles, flakes, fibers, whiskers, or other configurations of materials. These filler materials may be incorporated principally for the purpose of reducing the overall cost of the product without seriously undermining the properties of the polymer. For example, clays and talc have been added as inexpensive fillers. On the other hand, the filler materials may have been included to impart some improvement to a particular physical property exhibited by the polymer. For example, ceramic or glass fibers have been entrained in polymer bodies to provide reinforcement thereto. The higher strength demonstrated by those products is primarily dependent upon strong bonding between the inorganic fibers and the organic polymers.

Within the past two decades some research has been conducted to investigate the possibility of forming composite bodies consisting of inorganic glasses exhibiting low transition temperatures and organic polymers, which bodies would, desirably, demonstrate the combined properties of glass and plastic. Illustrative of that research is U.S. Pat. No. 3,732,181 (Ray et al.). As is observed there, the decomposition temperatures of known thermoplastic and thermosetting resins are so low that glass compositions where SiO₂ is the principal network or glass former cannot be employed. Hence, to be operable the T_{g} of the glass will be below 450°C and preferably below 350°C. (As customarily defined, the T_{g} of a glass is the temperature at which increases in specific heat and coefficient of thermal expansion take place which are accompanied by a sharp drop in viscosity. This temperature is frequently deemed to lie in vicinity of the glass annealing point.) That temperature limitation led to the use of glasses wherein P₂O₅ and/or B₂O₃ comprises the primary glass forming component. It is further explained there that, whereas thermoplastic resins have been principally investigated for use in glass-plastic composite articles, thermosetting resins which can be obtained as heat softenable precursors are also operable. Such resins can be blended with the glass into composite bodies with the reshaping and final heat curing being completed in a single operation.

U.S. Pat. No. 3,732,181, supra, describes seven general methods wherein glass in the form of fibers, films, flakes, powders, or sheets is combined with a polymer and that composite is fashioned into a desired configuration through a variety of shaping means including compression, molding, drawing, extrusion, hot pressing, injection molding, and spinning. The patent states that the ratio of polymer to glass may range from 0.1:99.9 to 99.9:0.1 on a volume basis, but also observes that the concentration of glass in the polymer typically ranges about 5-66% by volume.

Experience in the glass composition art has indicated that borate-based and phosphate-based glasses normally exhibit poorer chemical durability and resistance to moisture attack than silica-based compositions, and that failing becomes even more exacerbated as such glasses are formulated to demonstrate lower transition temperatures. For example, phosphate-based glasses manifesting a low T_{g} are commonly degraded when exposed to atmospheres of high humidity and not infrequently are actually hygroscopic. This lack of resistance to attack by moisture frequently encountered in phosphate-based glass compositions is evidenced in the rate of dissolution data provided in U.S. Pat. No. 3,732,181 with respect to the glasses utilized in the working examples. Because of this poor resistance to chemical and moisture attack evidenced by phosphate-based and borate-based glasses having a low T_{g}, glass-plastic composite articles fabricated from glasses and polymers which are thermally co-deformable at similar temperatures have not been marketed to any substantial extent. Thus, whereas the glass-plastic composite articles known to the art are not porous in a physical sense, the polymers are permeable to water; which permeability permits water to migrate into the article and thereby come into contact with the glass particles. Accordingly, because of the high surface area of the glass flakes, fibers, powders and the like present in the composite articles, degradation thereof can proceed rapidly. That situation becomes more pronounced as the proportion of glass in the composite is increased. Yet, to produce articles exhibiting high stiffness, high hardness, and good mechanical strength, the glass component should constitute the greater volume proportion thereof.

### SUMMARY OF THE INVENTION

Accordingly, an objective of the invention was to produce a phosphate-based glass/organic polymer composite and a method for making such a composite which exhibits increased durability, thereby rendering the composite less susceptible to hydration.

A further objective of the invention was to provide a stabilizer for addition to, and a stabilizing process for use with, that glass/polymer composite which significantly slows the reaction of water with the phosphate glass.

Still another objective of this invention was to provide the means for forming protective coating on the phosphate glass phase which can essentially limit the water uptake into the composite, thereby rendering the glass less susceptible to hydration.

Still another objective of this invention was to provide a glass/polymer composite of the type described above which maintains its physical performance properties over an extended period of time.

Hence, this invention discloses a composite of increased resistance to hydration, and a method for making such a composite, which comprises mixing at least one phosphate glass with at least one organic thermoplastic or thermosetting polymer and an amount of at least one water soluble stabilizer component which provides a source of metal cations having a valency of 2⁺ or higher. The amount of the stabilizer component is sufficient to improve the composite's resistance to moisture. Preferably, the mixture is comprised of the three basic components in the approximate indicated weight proportions: 1-99.5% of the matrix material; 0.1-95% of the phosphate glass; and, 0.01 to 40% of the stabilizer component. The metal cations which are found in the stabilizer component are preferably selected from the group consisting of Ba²⁺, Mg²⁺, Ca²⁺, Al³⁺, Zn²⁺, Sr⁺² and Fe³⁺.

The unique feature of the inventive composites is the action of the stabilizer vis-a-vis the phosphate glass. Thus, as described immediately above, the stabilizer component is selected such that in the presence of moisture it will produce metal cations having a valency greater than 2⁺. Accordingly, when the stabilizer is present in close proximity to the surface of the glass phase, those released metal cations form either an insoluble metal phosphate or a hydrated metal phosphate surface layer covering the glass surface. This surface layer acts as a barrier which effectively stops or slows the water from reacting with the glass components. The final outcome is an increase in durability of the composite with the resultant retention of the performance properties.

### PRIOR ART

U.S. Patent No. 4,079,022 (Ferrarini, Jr. et al.) discloses a glass composition comprising a relatively hydrophilic phosphate glass containing 50-72% mole percent P₂O₅ and having formed upon its surface water-insoluble phosphate salts of metals selected from the group consisting of magnesium, calcium, barium, iron, aluminum, lead and zinc. Also described therein is a method for forming the insoluble surface coating by exposing the glass to an alkaline solution containing the above listed metal ions for a time sufficient to form the relatively water-insoluble component on the surface of the glass.

A number of differences distinguish the present invention from the Ferrarini reference. First, the Ferrarini reference claims a glass composition and a method for treating the glass composition, while the instant invention claims a glass/polymer composite (as defined in the instant specification) and a method for enhancing the durability of the glass/polymer composite by providing a means for coating the glass phase with insoluble layers when moisture is present. Secondly, the glass composition claimed in the Ferrarini patent is comprised of 50-72% P₂O₅, while the glass phase of the glass/polymer composite contains only 28-40% P₂O₅. Lastly, the method of stabilization in the Ferrarini reference involves exposing the glass to an alkaline solution containing metal ions, while the instant invention involves the distinguishable step of adding a solid stabilizer component directly to a glass/polymer mixture. Rather than forming an insoluble layer as is disclosed in the reference, the instant invention describes a water soluble stabilizer component in close proximity to the glass phase surface, which, in the presence of moisture, will release metal cations which then form, in situ, the insoluble layer.

### BRIEF DESCRIPTION OF THE DRAWINGS

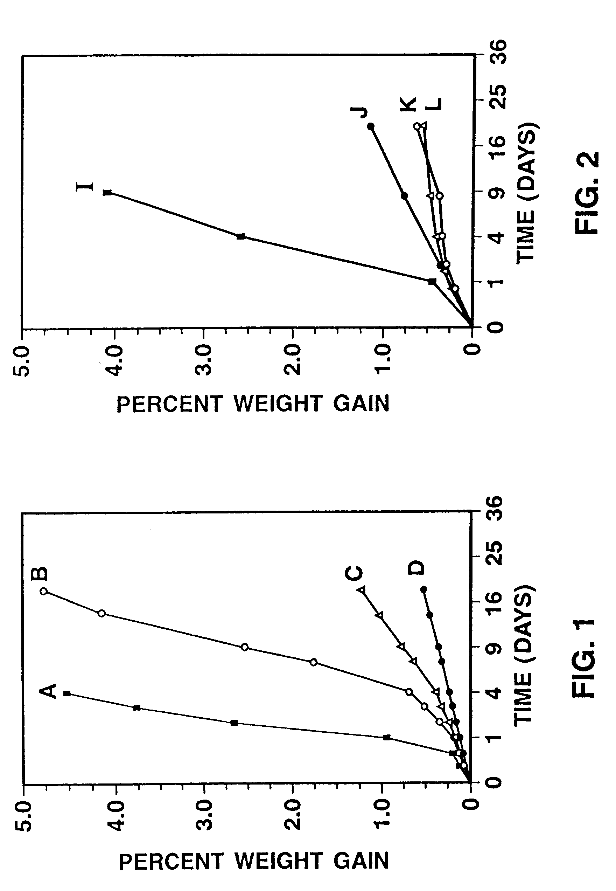

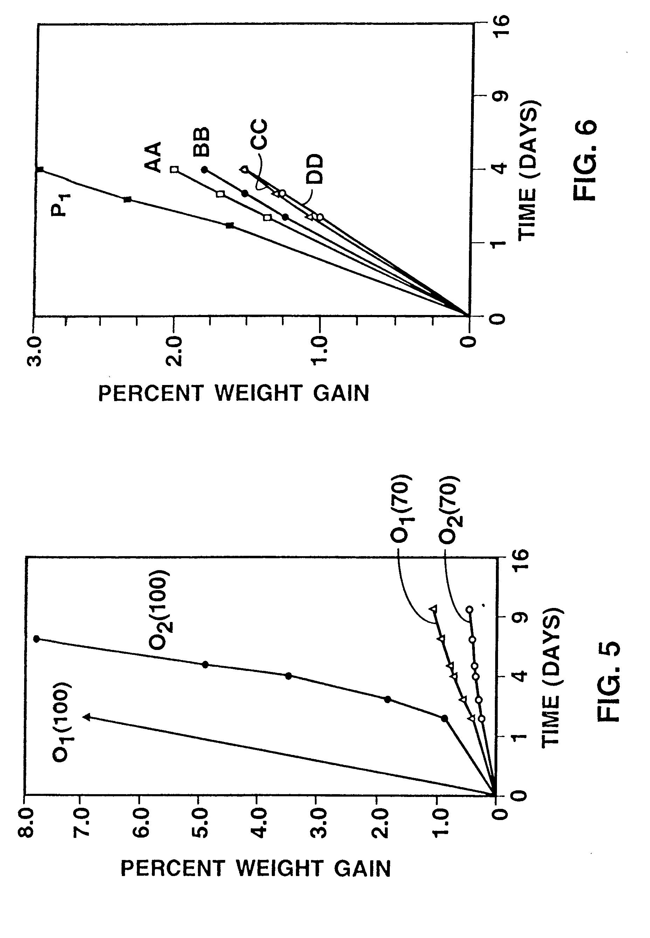

FIGS. 1-6 are graphs illustrating the effect of the stabilizer component on the durability of the glass/polymer composite.

### DESCRIPTION OF THE PREFERRED EMBODIMENTS

The term composite as used herein is defined as something made up of distinct parts, i.e, an organic polymer with a glass filler. Specifically, in the instant invention the composites are certain engineering polymers filled with a low temperature phosphate glass. In other words, there is no interaction between the distinct glass and polymer parts in a glass/polymer composite.

The term composite should be distinguished from the term alloy used in U.S. Pat. No. 5,043,069 (Bahn et al.). Therein, alloy is defined as a glass/polymer material which exhibits a uniform fine-grained microstructure resulting from an interaction between a phosphate glass phase and an organic polymer phase. Uniform fine-grained microstructure is defined more fully therein.

The instant invention discloses a composite material of increased resistance to moisture comprising a mixture of the following components: a matrix material comprised of at least one organic thermoplastic or thermosetting polymer; at least one phosphate glass; and, an amount of, at least one water soluble stabilizer component which provides a source of metal cations having a valency of 2⁺ or higher, sufficient to improve the composite's resistance to moisture. In other words, the amount of the stabilizer component should be that amount effective in reducing the weight gain of the composite over time. Preferably, the mixture comprises those three basic components in the approximate indicated weight proportions: 1-99.5% of the matrix material; 0.1-95% of the phosphate glass; and, 0.01 to 40% of the stabilizer component.

As described above, the inventive composite preferably contains about 0.1-95 weight percent of a phosphate glass, which, as used herein, is any low temperature inorganic oxide glass that has a composition within the following range expressed in terms of mole percent on the oxide basis: about at least 65% total of 10-55% ZnO, 28-40% P₂O₅, and 10-35% R₂O, wherein R₂O consists of at least two alkali metal oxides in the indicated proportions selected from the group consisting of 0-25% Li₂O, 0-25% Na₂O, and 0-25% K₂O. In addition, up to a 35% total of optional ingredients may be added to the base glass composition; the optional components being selected from the group consisting of 0-10% Al₂O₃, 0-15% B₂O₃, 0-15% Cu₂O, 0-25% Sb₂O₃, 0-35% PbO, 0-35% SnO, 0-5% ZrO₂, 0-4% SiO₂, 0-20% MgO, 0-20% CaO, 0-20% SrO, 0-20% BaO, 0-10% MnO, 0-10% WO₃, 0-10% MoO₃, 0-5% rare earth metal oxide, and 0-5% F, the fluoride being present as analyzed in weight percent. However, the above glass composition does have the following further amount limitations: the amount of Al₂O₃ +B₂O₃ does not exceed 15%, the amount of WO₃ + MoO₃ does not exceed 15% and the total combined amount of MgO+CaO+SrO+BaO+MnO does not exceed 20%.

TABLE I records a group of preferred glass compositions, expressed in terms of mole percent on the oxide basis, used in preparing the inventive glass/plastic composites of the present invention. Each glass was compounded from oxide, carbonate, and phosphate batch materials. Those batch materials were automatically tumble-mixed or ballmilled and melted in silica crucibles at temperatures in the vicinity of 1000°C for times of about three hours. Very little volatilization of P₂O₅ was noted, as the analyzed values of P₂O₅ were typically only a few tenths percent below that calculated from the batch.

**TABLE I**

| | 1 | 2 |
|---|---|---|
| P₂O₅ | 33 | 33 |
| ZnO | 43 | 40 |
| Al₂O₃ | 2 | 2 |
| Li₂O | 6 | 7 |
| Na₂O | 7 | 8 |
| K₂O | 7 | 5 |
| SnO | - | 5 |
| WO₃ | 2 | - |

Because a pulverized material was desired to form feedstock for mixing, the melts were poured through patterned metal rollers to produce a textured surface which was easily crushed to predetermined-sized fragments; or more preferably the melts were poured as a fine stream into a bath of cold water, a practice termed "drigaging". If desired, the glass particles/fragments may be pelletized for ease of handling.

The polymer matrix material, preferably comprising about 1-99.5 weight percent of the inventive composite disclosed herein, consists of at least one organic thermoplastic or thermosetting polymer. The matrix material utilized in the instant specification's later-disclosed examples is a high temperature thermoplastic, specifically, polyethersulfone (PES). Although the instant specification describes only composites containing PES, it is contemplated that the increase in durability due to addition of a stabilizer agent disclosed herein would be effective in any composite which contained a phosphate glass and a polymer. Polymers specifically contemplated as within the scope of the invention are thermoplastics, such as polypropylene, polyaryletherketones, polyolefins, ABS, polystyrenes, polyphenylene sulfides, polyfluoro resins, polyetherimides, liquid crystal polyesters, polyetheretherketones, polyetherketones, polyethylterephthalates, polybutylterephthalates, melamines, polyamides, polyphosphazenes and polycarbonates. Thermosets such as epoxy resins, silicone resins, polyimides, phenolics, and diallyl phthalates should also be included within the scope of the invention.

The water soluble stabilizer component which provides a source of metal cations having a valency of 2⁺ or higher, comprising preferably about 0.01 to 40 weight percent of the total composite mixture, should ideally be added in a sufficient amount whereby the resultant composite will possess a durability which is improved over that exhibited by an unstabilized composite. In other words, a "stabilized composite" is one in which there is an improvement in durability as evidenced by a decrease in the percent weight gain of the composite over time. It is important to note that a stabilized composite, i.e., one which possesses an effective amount of a stabilizer, cannot be defined by a standard test (e.g., less than X % weight gain in 50°C in X hours), because the amount of water that the composite absorbs and, ultimately the weight the lower durability glass component gains, is variable depending upon the amount of glass in the mixture and the transmission rate of the polymer utilized in the composite; water transmission varies from polymer-to-polymer and as well as from test temperature-to-test temperature. Therefore, although the instant invention measures the weight gain at 100°C for a polypropylene-based composite, the improvement cannot be defined in terms of these conditions because of this variability.

There are certain requirements that a potential stabilizer must meet that determine which materials will be effective. First, the material must constitute a source of metal cations which have a valency of 2⁺ or greater, preferably chosen from the group consisting of Ba²⁺, Al³⁺, Mg²⁺, Ca²⁺, Zn²⁺, Sr²⁺ and Fe³⁺. Additionally, the material should be able to partially dissolve in water to thereby release ions or ionic complexes which would then be available to react with the surface layer of the glass to form the insoluble and durable metal phosphate or hydrated metal phosphate layer. For example, although TiO₂, Al(OH)₃, and Al₂O₃ all are sources of metal cations having a valency of 2⁺ or higher, they possess a solubility in water that is too low to provide a sufficiently high concentration of ions or ionic complexes needed to form the insoluble glass layer. On the other hand, the additive must not be so soluble in water that it causes its own durability problem, i.e., a solubility so high that water readily attacks the additive itself leaving a porous material. By way of example, CaCl₂ is a compound that is too soluble to function as a stabilizer additive, whereas CaCO₃, having a much lower but sufficient solubility, is an effective stabilizer component. Specifically, for a stabilizer component to be effective, its solubility should be within the range of .00001 to 0.1 g/100cc in 25°C H₂O. Therefore, the actual constituent added to the glass/polymer mix as the stabilizer component comprises any material, either oxide or other compound, which satisfies the above requirements, an example being the use of ZnO as a stabilizer component.

As an alternative to, or as a complement of the direct addition of the stabilizer, the stabilizer component can be added by precoating the glass particles prior to the actual compounding of the composite, i.e., prior to composite processing of the glass and the polymer. The precoating of the glass particles would involve adding the glass particles to an aqueous solution containing the stabilizer component; e.g. , a 1 % Ca(OH)₂ or CaCl₂ aqueous solution would be suitable if Ca²⁺ ions were desired. Following the addition of the glass particles to the solution the slurried mixture would be filtered, washed to a pH of approximately 7 and then dried. This precoated glass would then be compounded with the polymer and additional stabilizer (if desired) to form the enhanced durability inventive composite.

The following outlines specific mixing, stabilization and molding parameters employed in the examples reported below:
In each example the glass fragments/pellets having an average particle size of about 10 microns were dried overnight in a forced air oven operating at about 150°C prior to being mixed with pellets of polymer having a similar average particle size and with the stabilizer component having a fine particle size, generally less than 1 micron. A Torque rheometer mixing bowl, marketed by the Haake Buchler Corporation, Saddle Brook, N.J., under the designation System 40, was used to achieve the desired mixing of glass, stabilizer component and polymer. The glass, stabilizer and polymer were mixed for 5-10 minutes at a temperature of 180°C and at 100 RPM; a temperature sufficient to soften the polymer. Once thoroughly mixed, the glass/polymer mixture was hot pressed into 5"x0.5"x0.125" test bars.

TABLE II records several representative composite compositions, both stabilized and unstabilized, which were prepared from the glass compositions recited in TABLE 1 and then extruded and injection molded into 5" x 0.5" x 0.125" test bars. These test bars were then utilized in the later-described durability tests. Tables III and IV report additional composite compositions, both stabilized and unstabilized, also prepared from the glasses recited in Table I. However, it is imperative to note that, although all values listed in Tables III and IV are listed in weight percent, each of the stabilized examples contains an equivalent volume percent of glass as that of the unstabilized; i.e., although the stabilized comparison examples consist of three components (addition of the stabilizer) the volume fraction of the glass remains constant.

In Tables II, III and IV the abbreviations present therein have the following meanings:
PP refers to the polypropylene currently marketed as Pro-fax® 626 and commercially available from Himont Incorporated, Wilmington Del.

ZnO refers to the use of zinc oxide as the stabilizer.

CaCO₃ refers to the use of calcium carbonate as the stabilizer component.

Mg(OH)₂ refers to the use of magnesium hydroxide as the stabilizer component.

MgCa(CO₃)₂ refers to the use of dolomite as the stabilizer component.

The ratios of glass to polymer to stabilizer, e.g., 40/50/10;Ex.2/PP/CaCO₃, reflect weight % glass to weight % polymer to weight % stabilizer; in other words, 40% Example 2 glass to 50% polypropylene to 10% calcium carbonate stabilizer.

**TABLE II**

| Composite Example | Weight Ratio | Components |
|---|---|---|
| A | 40/60/-- | Ex.2/PP/-- |
| B | 40/50/10 | Ex.2/PP/CaCO₃ |
| C | 10/80/10 | Ex.2/PP/CaCO₃ |
| D | 20/60/20 | Ex.2/PP/CaCO₃ (calcite) |
| E | 20/80/-- | Ex.2/PP/-- |
| F | 20/60/20 | Ex.2/PP/MgCa(CO₃)₂ |
| G | 20/60/20 | Ex.2/PP/CaCO₃ (aragonite) |
| H | 20/60/20 | Ex.2/PP/Mg(OH)₂ |

**TABLE III**

| Composite Example | Weight Ratio | Components |
|---|---|---|
| M₁ | 5.2/94.8/-- | Ex.2/PP/-- |
| M₂ | 5/90/5 | Ex.2/PP/ZnO |
| N₁ | 65/35/-- | Ex.2/PP/-- |
| N₂ | 57.7/27.8/14.5 | Ex.2/PP/ZnO |
| O₁ | 70/30/-- | Ex.2/PP/-- |
| O₂ | 62.3/24/13.7 | Ex.2/PP/ZnO |
| P₁ | 20/80/-- | Ex.2/PP/-- |

**TABLE IV**

| Composite Example | Weight Ratio | Components |
|---|---|---|
| AA | 20/79.9/0.1 | Ex.2/PP/ZnO |
| BB | 20/79.8/0.2 | Ex.2/PP/ZnO |
| CC | 20/79.0/2.0 | Ex.2/PP/ZnO |
| DD | 20/79.5/0.5 | Ex.2/PP/ZnO |

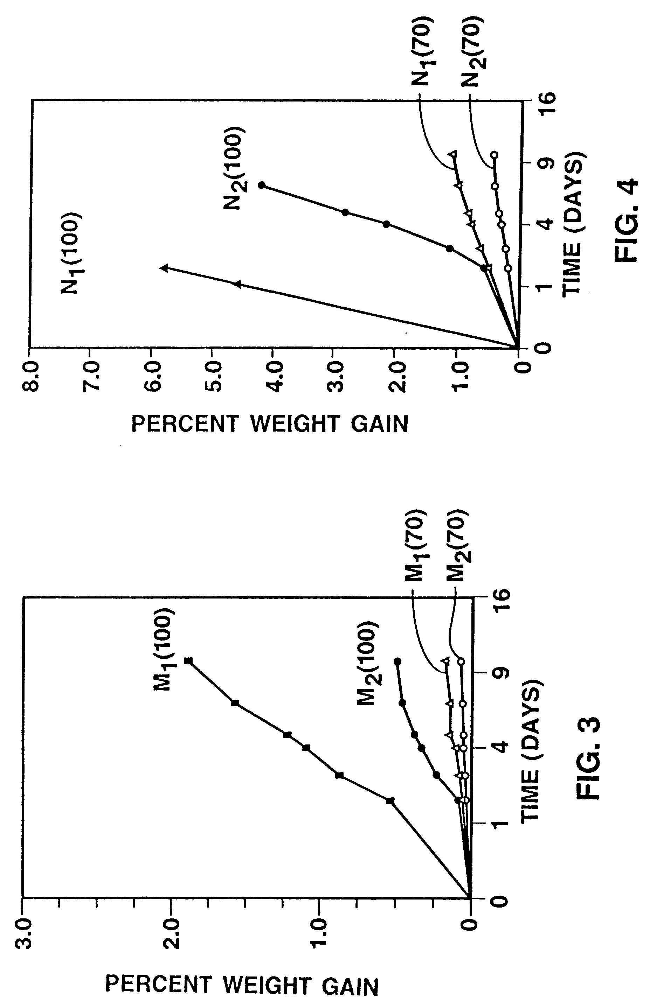

FIGS. 1-6 report that the addition of a stabilizer component to the glass/polymer composite results in an increase in the durability of the composite; the stabilized examples all have decreased water retention, as evidenced by the lowered weight gain exhibited by those stabilized composite examples. Specifically, the accelerated durability test involved placing test bars of each composition example in deionized water maintained at specified temperatures, 70°C and/or 100°C. The test bars were then removed and weighed at periodic intervals. The weight gain data were then converted to a percentage gain and plotted to generate the curves illustrated in FIGS 1-6; FIGS. 1 and 2 report the durability (percentage weight gain) for the samples as measured at 100°, while FIGS. 3-6 report the durability as measured at both 70°C and 100°C. For example, the data reported in Tables V and VI are the actual weight, the interval at which sample was weighed (Hrs) for Examples N through P and AA through DD, at both 100° and 70° C, respectively These data were converted to percentage weight plotted to generate the specific curves reported as FIGS 3-6.

**TABLE V**

| Hours (100°C) | **M₁** | **M₂** | **N₁** | **N₂** | **O₁** | **O₂** | **P₁** |
|---|---|---|---|---|---|---|---|
| 0 | 1.9489 | 2.033 | 3.8115 | 4.3852 | 4.2750 | 4.9669 | 2.1173 |
| 41 | 1.9593 | 2.0352 | 4.0325 | 4.4081 | 4.5696 | 4.9912 | 2.1515 |
| 65 | 1.9657 | 2.0377 | -- | 4.4150 | 4.4767 | 4.9977 | 2.1664 |
| 93 | 1.9705 | 2.0394 | -- | 4.4207 | -- | 5.0033 | 2.1799 |
| 112 | 1.9732 | 2.0404 | -- | 4.4233 | -- | 5.0064 | 2.1870 |
| 166 | 1.9793 | 2.0419 | -- | 4.4301 | -- | 5.0140 | 2.1986 |
| 233 | 1.9853 | 2.0431 | -- | 4.4372 | -- | 5.0230 | 2.2060 |

**TABLE VI**

| Hours (70°C) | **M₁** | **M₂** | **N₁** | **N₂** | **O₁** | **O₂** | **P₁** |
|---|---|---|---|---|---|---|---|
| 0 | 1.9266 | 1.9367 | 3,5174 | 4.2530 | 3.9042 | 4.5232 | 2.0821 |
| 41 | 1.9277 | 1.9374 | 3.5361 | 4.2622 | 3.9388 | 4.5367 | 2.0842 |
| 65 | 1.9283 | 1.9377 | 3.5580 | 4.2643 | 3.9762 | 4.5393 | 2.0854 |
| 93 | 1.9287 | 1.9379 | 3.5926 | 4.2656 | 4.0404 | 4.5413 | 2.0863 |
| 112 | 1.9286 | 1.9377 | 3.6163 | 4.2662 | 4.0925 | 4.5420 | 2.0866 |
| 166 | 1.9295 | 1.9382 | 3.6661 | 4.2680 | 4.2110 | 4.5440 | 2.0889 |
| 233 | 1.9302 | 1.9383 | 3.8332 | 4.2700 | 4.3414 | 4.5464 | 2.0916 |

**TABLE VII**

| **Hrs.** | **AA** | **BB** | **CC** | **DD** |
|---|---|---|---|---|
| 0 | 2.2969 | 2.3807 | 2.3574 | 2.3118 |
| 50 | 2.3286 | 2.4108 | 2.3815 | 2.3350 |
| 72 | 2.3358 | 2.4172 | 2.3875 | 2.3411 |
| 96 | 2.3432 | 2.4235 | 2.3930 | 2.3469 |
| 120 | 2.3517 | 2.4300 | 2.3985 | 2.3529 |

It can be readily seen in FIGS. 1 and 2 that each of the unstabilized Examples, A and E, exhibited a much larger percentage weight gain than the stabilized Examples. Although the volume percent of the glass is reduced in the stabilized examples, it is still clear that they are stabilized due to the large decrease in the weight gain exhibited by those stabilized examples. Comparing the unstabilized Example A to the CaCO₃-stabilized Example D of FIG. 1, it is observed that Example D was extremely more durable; Example D exhibited a 0.5% weight gain in 16 days while Example A exhibited a weight gain of approximately 4.5% in only 4 days. FIG. 2 reports that the CaCO₃-stabilized Example K exhibited approximately a 0.7% weight gain in about 25 days, while the unstabilized Example I (same glass weight percent) exhibited a greater than 4% weight gain in approximately 9 days.

Each of the FIGS. 3-6 compares an unstabilized sample with a stabilized example having an equivalent volume percent of the lower durability, water-uptake glass component. It thus becomes even clearer that the increase in durability, i.e., the ability to resist moisture, is due to the addition of the inventive stabilizer component. Taking a look at FIGS. 3-6, all of the stabilized examples (M₂-O₂ and AA-DD) have a lower weight gain over time, at either 70 or 100°C, when compared to that of the unstabilized examples (M₁-O₁ and P₁); thus, it is quite evident that a durability improvement is achieved with the addition of the stabilizer component.

While not intending to be limited by theory, the mechanism of stabilization, i.e., the increase in durability, is thought to be the result of the formation of an insoluble and durable surface layer or coating which forms on the entire surface of the phosphate glass elements of the composite material. As this coating is insoluble, its acts as a barrier which prohibits the water from attacking the glass structure and causing the subsequent swelling, weight gain and reduction in performance in the glass/polymer composite Specifically, this insoluble metal phosphate or hydrated metal phosphate surface layer is a result of the metal ion reacting with the phosphate groups found in the phosphate glass. Therefore, it is thought that the actual formation of the coating or protective layer occurs when external water enters the glass/polymer/stabilizer composite, thereby causing the stabilizer component in close proximity to the surface of the glass phase to dissolve and thereby release the metal cations. The phosphate groups, either in solution because the water has hydrated the glass creating phosphate ions, or as phosphate sites on the surface of the glass, then react with metal ions to form the insoluble protective layer which covers the surface of the glass elements; either an insoluble metal phosphate or a hydrated metal phosphate surface layer.

## Claims

1. A composite of increased resistance to moisture comprising a mixture of the following components:
(a) a matrix material comprised of at least one organic thermoplastic or thermosetting polymer;
(b) at least one phosphate glass; and,
(c) an amount of at least one water soluble stabilizer component which provides a source of metal cations having a valency of 2+ or higher, whereby the amount is sufficient to improve the composite's resistance to moisture.

2. The composite as claimed in claim 1 wherein the mixture is comprised of the components in following approximate indicated weight proportions
(a) 1-99.5% of the matrix material;
(b) 0.1-95% of the phosphate glass; and,
(c) 0.01 to 40% of the stabilizer component.

3. The composite as claimed in claim 1 wherein the mixture is comprised of the components in following approximate indicated weight proportions
(a) 5-95% of the matrix material;
(b) 1-90% of the phosphate glass; and,
(c) 0.01 to 40% of the stabilizer component.

4. The composite as claimed in claim 1 wherein the metal cation is selected from the group consisting of Ba²⁺, Mg²⁺, Ca²⁺, Al³⁺, Zn²⁺, Sr⁺² and Fe³⁺.

5. The composite as claimed in claim 1 wherein the phosphate glass consists essentially, expressed in terms of mole percent on the oxide basis, of at least 65% total of 10-55% ZnO, 28-40% P₂O₅, 10-35% R₂O, wherein R₂O consists of at least two alkali metal oxides in the indicated proportions selected from the group consisting of 0-25% Li₂O, 0-25% Na₂O, and 0-25% K₂O, and up to 35% total of optional ingredients in the indicated proportions selected from the group consisting of 0-10% Al₂O₃, 0-15% B₂O₃, 0-15% Cu₂O, 0-25% Sb₂O₃, 0-35% PbO, 0-35% SnO, 0-5% ZrO₂, 0-4% SiO₂, 0-20% MgO, 0-20% CaO, 0-20% SrO, 0-20% BaO and 0-10% MnO, 0-10% WO₃, 1-10% MoO₃, 0-5% rare earth metal oxide, and 0-5% F, as analyzed in weight percent, wherein Al₂O₃+B₂O₃ does not exceed 15%, WO₃+MoO₃ does not exceed 15% and MgO+CaO+SrO+BaO+MnO does not exceed 20%.

6. The composite as claimed in claim 1 wherein the matrix material is comprised of a high temperature thermoplastic selected from the group consisting of polyethersulfone, polypropylene, polyaryletherketones, polyolefins, ABS, polystyrenes, polyphenylene sulfides, polyfluoro resins, polyetherimides, liquid crystal polyester, polyetheretherketones, polyetherketones, polyethylterephthalates, polybutylterephthalates, melamines, polyamides, polyphosphazenes and polycarbonates or a high temperature thermoset selected from the group consisting of epoxy resins, silicone resins, polyimides, phenolics, and diallyl phthalates.

7. The composite as claimed in claim 1 wherein the glass element possess a partial surface coating comprised of the stabilizer component which, in the presence of moisture, releases the metal cations to form either an insoluble metal phosphate or a hydrated metal phosphate surface layer.

8. A method for making a composite of increased resistance to moisture according to any one of claims 1-7, comprising the steps of:
(a) heating and thoroughly mixing the polymer and the glass with an amount of the water soluble stabilizer component sufficient to improve the composite's resistance to moisture;
(b) shaping the mixture into an article of a desired geometry;
(c) cooling the article to room temperature.

9. A method for making a composite of increased resistance to moisture according to any one of claims 1-7, comprising the steps of:
(a) treating the phosphate glass with a solution containing an amount of stabilizer component sufficient to improve the composite's resistance to moisture;
(b) heating and thoroughly mixing the treated phosphate glass and the matrix material; and,
(c) shaping the mixture into an article of a desired geometry; and then
(d) cooling the article to room temperature.

10. The method as claimed in claim 9 wherein the thorough mixing step includes adding an amount of at least one water soluble stabilizer component which provides a source of metal cations having a valency of 2+ or higher, whereby the amount is sufficient to improve the composite's resistance to moisture.
